# EUROPEAN PATENT APPLICATION

(11) **EP 1 356 955 A1**
(43) Date of publication of application: **29.10.2003**
(21) Application number: 03008784.5
(22) Date of filing: 22.04.2003
(51) Int. Cl.: B60B 7/16

(54) **Anti-theft device and wrench tool for detaching the same**

(30) Priority: 22.04.2002 JP 2002119793
(71) Applicant: SASAKI, Minoru, Sagamihara-shi, Kanagawa-ken (JP)
(72) Inventor: SASAKI, Minoru, Sagamihara-shi, Kanagawa-ken (JP)
(74) Representative: Wagner, Karl H., Dipl.-Ing.

(57) **Abstract**

An anti-theft device (1) is used with an attachment device (4) used to attach a hubcap to a wheel of a vehicle or a rim to an axle of a vehicle. Such an attachment device may be a bolt or a nut. The anti-theft device has a receiving portion (10) and a key portion (12). The receiving portion of the anti-theft device receives a head (4a) of the attachment device. The key portion has a key arrangement provided thereon. A wrench tool (5) for detaching such an anti-theft device is provided.

## Description

### BACKGROUND OF THE INVENTION

### Field of the Invention:

The present invention relates to an anti-theft device, and more particularly to an anti-theft device for preventing theft of a hubcap attached to a wheel of a vehicle or a rim attached to an axle of a vehicle. The present invention also relates to a wrench tool for detaching such an anti-theft device.

### Description of the Related Art:

Hubcaps are typically attached to a wheel of a vehicle, and rims are typically attached to an axle of a vehicle with a bolt or nut. In recent years, hubcaps or rims have frequently been stolen by detaching bolts or nuts. In order to prevent such theft of hubcaps or rims, there has been developed an anti-theft device (bolt or nut) having a head with a specially shaped keyway formed in an upper surface of the head. Such an anti-theft bolt or nut cannot be loosened without a special socket.

However, bolts (or nuts) used to attach hubcaps or rims have different lengths and shapes, depending on types of vehicles. Therefore, manufacturers are required to prepare many types of anti-theft bolts. Further, an owner of a vehicle should properly select a suitable type from among many types of anti-theft bolts. Furthermore, in a conventional anti-theft device, a keyway is formed integrally with a bolt or nut, so that manufacturing cost of the anti-theft device is increased.

### SUMMARY OF THE INVENTION

The present invention has been made in view of the above drawbacks. It is, therefore, an object of the present invention to provide an anti-theft device which can widely be used even though bolts or nuts used to attach hubcaps to wheels or rims to axles of vehicles have different lengths and shapes and can be produced at low cost.

Another object of the present invention is to provide a wrench tool for detaching such an anti-theft device.

According to a first aspect of the present invention, there is provided an anti-theft device for preventing theft of a hubcap or rim. The anti-theft device is used with an attachment device used to attach a hubcap to a wheel or a rim to an axle of a vehicle. Such an attachment device may be a bolt or a nut. The anti-theft device has a receiving portion and a key portion. The receiving portion of the anti-theft device receives a head of the attachment device. The key portion has a key arrangement provided on the receiving portion.

When the anti-theft device having the above arrangement is attached to the attachment device, the attachment device is covered with the anti-theft device, and the key arrangement is exposed to the exterior. Accordingly, the attachment device with the anti-theft device cannot be loosened with general tools, so that theft of a hubcap or rim is prevented. Even though attachment devices have different lengths and shapes depending on types of vehicles, the anti-theft device can be attached to every attachment device as long as the receiving portion fits the head of the attachment device. Therefore, it is not necessary for manufacturers to prepare so many types of anti-theft devices, and an owner of a vehicle can easily select a suitable type for hubcaps or rims of his/her vehicle. Further, since the anti-theft device can be produced separately from the attachment devices, manufacturing cost can be reduced as compared to conventional anti-theft devices. Therefore, it is possible to reduce costs for preventing theft of hubcaps or rims.

The key arrangement may have a plurality of recesses formed in a surface of the key portion. The recesses may comprise circular recesses. The key arrangement may have a plurality of pins, and these pins may be inserted into the above recesses. The recesses or the pins may be arranged at predetermined positions along a circumferential direction.

It is desirable that the receiving portion has a through-hole formed in a sidewall thereof for receiving a locking member which bites into the head of the attachment device. With this arrangement, the anti-theft device can reliably fix to the head of the attachment device.

According to a second aspect of the present invention, there is provided a wrench tool for detaching the above anti-theft device. The wrench tool has a wrench portion rotatable by a wrench and an engagement portion having a key arrangement for engaging with the key arrangement of the anti-theft device. The anti-theft device can be detached with the wrench tool having the above arrangement and a wrench.

The above and other objects, features, and advantages of the present invention will be apparent from the following description when taken in conjunction with the accompanying drawings which illustrate preferred embodiments of the present invention by way of example.

### BRIEF DESCRIPTION OF THE DRAWINGS

FIG. 1 is a perspective view explanatory of attachment of an anti-theft device according to an embodiment of the present invention;
FIG. 2 is a perspective view showing the anti-theft device shown in FIG. 1 together with a bolt used to attach a rim to an axle of a vehicle;
FIG. 3 is a plan view of the anti-theft device shown in FIG. 2;
FIG. 4 is a cross-sectional view taken along a line A-A of FIG. 3;
FIG. 5 is a side view of FIG. 3;
FIG. 6 is a bottom view of FIG. 3;
FIG. 7 is a plan view showing a wrench tool for detaching the anti-theft device shown in FIG. 2;
FIG. 8 is a cross-sectional view taken along a line B-B of FIG. 7;
FIG. 9 is a side view of FIG. 7;
FIG. 10 is a bottom view of FIG. 7; and
FIG. 11 is a perspective view showing an anti-theft device according to another embodiment of the present invention, together with a nut used to attach a hubcap or rim.

### DETAILED DESCRIPTION OF THE PREFERRED EMBODIMENTS

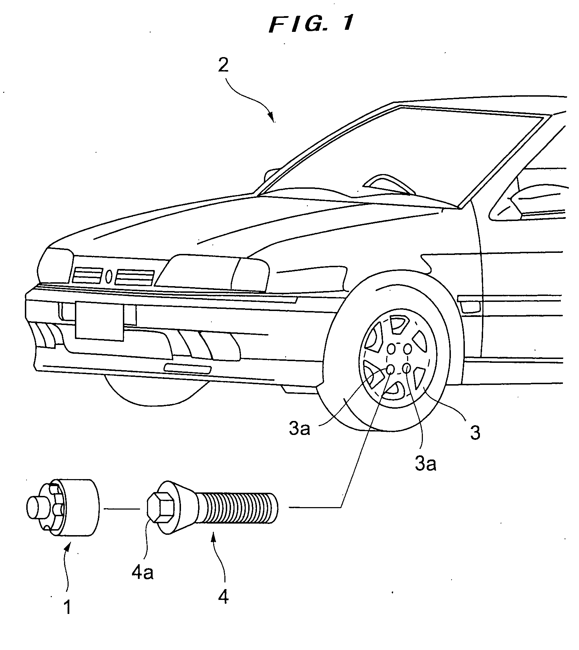

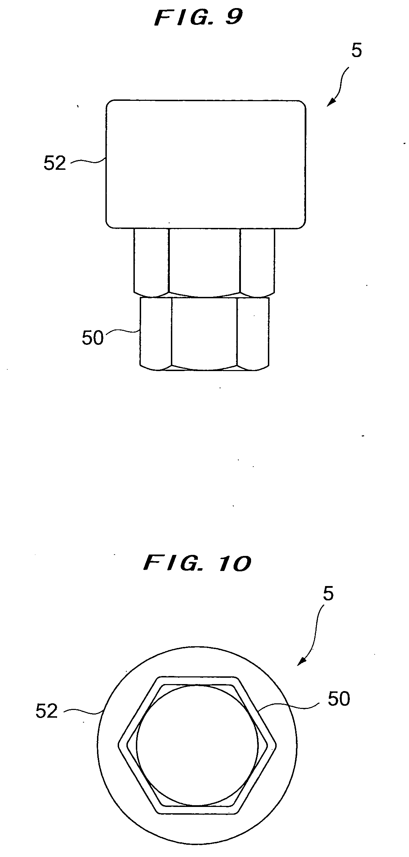

An anti-theft device according to embodiments of the present invention will be described below with reference to FIGS. 1 through 11. Like or corresponding parts are denoted by like or corresponding reference numerals throughout drawings and will not be described below repetitively.

FIG. 1 illustrates an anti-theft device 1 (hereinafter referred to as a wheel lock) according to an embodiment of the present invention. Each rim 3 is attached to an axle (not shown) of a vehicle 2 such as a car. As shown in FIG. 1, the rim 3 has a plurality of bolt holes 3a formed therein. Attachment bolts (i.e., attachment devices) 4 are inserted into the bolt holes 3a of the rim 3 and fastened to the axle to attach the rim 3 to the axle of the vehicle 2. As shown in FIG. 1, the wheel lock 1 according to the present invention is attached to a head 4a of each attachment bolt 4.

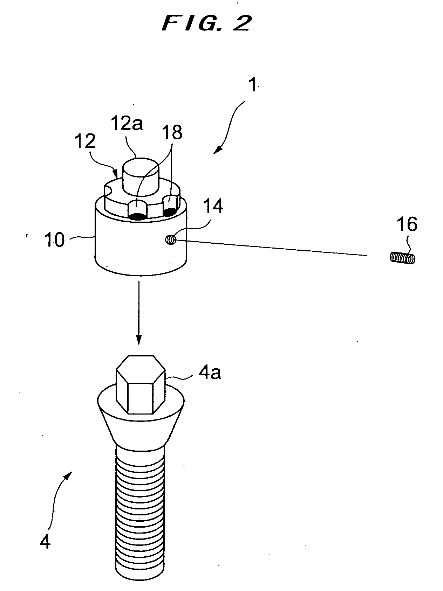

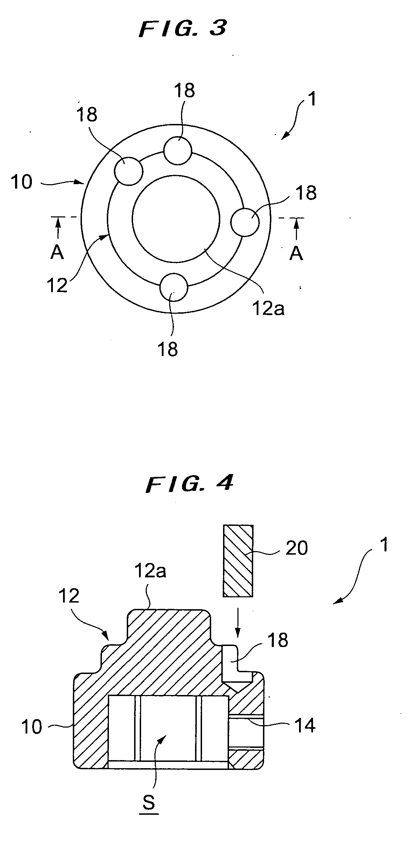

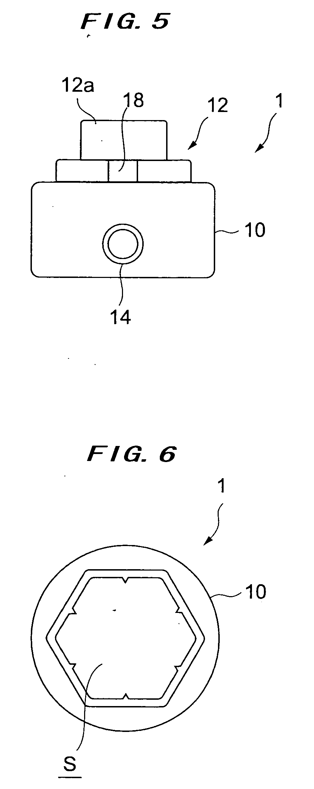

FIG. 2 is a perspective view showing the wheel lock 1 shown in FIG. 1, together with the attachment bolt 4. FIG. 3 is a plan view of the wheel lock 1 shown in FIG. 2. FIG. 4 is a cross-sectional view taken along a line A-A of FIG. 3. FIG. 5 is a side view of FIG. 3, whereas FIG. 6 is a bottom view of FIG. 3. As shown in FIGS. 2 through 6, the wheel lock 1 has a cylindrical receiving portion 10 and a key portion 12 provided on an upper surface of the receiving portion 10. The receiving portion 10 has a downwardly opened receiving space S formed therein.

As shown in FIG. 2, the attachment bolt 4 has a polygonal head 4a, e.g., a hexagonal column, at the top of the attachment bolt 4. As shown in FIGS. 4 and 6, the receiving space S of the receiving portion 10 has a shape corresponding to the shape of the head 4a of the attachment bolt 4. The receiving portion 10 has an inner surface shaped to receive the head 4a of the attachment bolt 4. Specifically, the receiving space S of the wheel lock 1 is designed such that the head 4a of the attachment bolt 4 can fit into the receiving space S. Thus, the head 4a of the attachment bolt 4 is fitted into the receiving space S under pressure to fix the wheel lock 1 to the attachment bolt 4. The wheel lock 1 may be fixed to the attachment bolt 4 by an adhesive, a magnetic force, brazing, or the like.

As shown in FIGS. 4 and 5, the receiving portion 10 has a through-hole 14 formed in a sidewall thereof. For example, a cylindrical locking screw (locking member) 16 is inserted into the through-hole 14 (see FIG. 2) to bite into the head 4a of the attachment bolt 4 which is disposed in the receiving space S. Thus, the wheel lock 1 can reliably be fixed to the head 4a of the attachment bolt 4. Further, after the locking screw 16 has bitten into the head 4a of the attachment bolt 4, an adhesive may be injected into the through-hole 14 to bond the locking screw 16, the wheel lock 1, and the head 4a of the attachment bolt 4 to each other. In this case, the wheel lock 1 can more reliably be fixed to the head 4a of the attachment bolt 4.

As shown in FIGS. 2 and 3, the key portion 12 has a cylindrical central portion 12a provided on an upper surface thereof, and a plurality of recesses, for example, circular recesses, formed around the central portion 12a. As shown in FIG. 4, a pin, for example, a cylindrical pin, is fitted into each recess under pressure. In the exemplary embodiment, as shown in FIG. 3, four circular recesses 18 are formed at predetermined positions along a circumferential direction. The circular recesses 18 and the cylindrical pins 20 form a special key arrangement of the key portion 12 of the wheel lock 1. When the wheel lock 1 is attached to the attachment bolt 4, the head 4a of the attachment bolt 4 is covered with the wheel lock 1, and the aforementioned key arrangement is exposed on the top of the attachment bolt 4. Accordingly, the attachment bolt 4 with the wheel lock 1 cannot be loosened with general tools, so that theft of the rim 3 is prevented.

Even though attachment bolts have different lengths and shapes depending on types of vehicles, the wheel lock 1 can be attached to every attachment bolt as long as the receiving portion 10 fits the head of the attachment bolt. Therefore, it is not necessary for manufacturers to prepare so many types of wheel locks, and an owner of a vehicle can easily select a suitable type for hubcaps or rims of his/her vehicle. Further, since the wheel lock 1 can be produced separately from attachment bolts 4, the manufacturing cost can be reduced as compared to conventional anti-theft devices. Therefore, it is possible to reduce costs for preventing theft of hubcaps or rims.

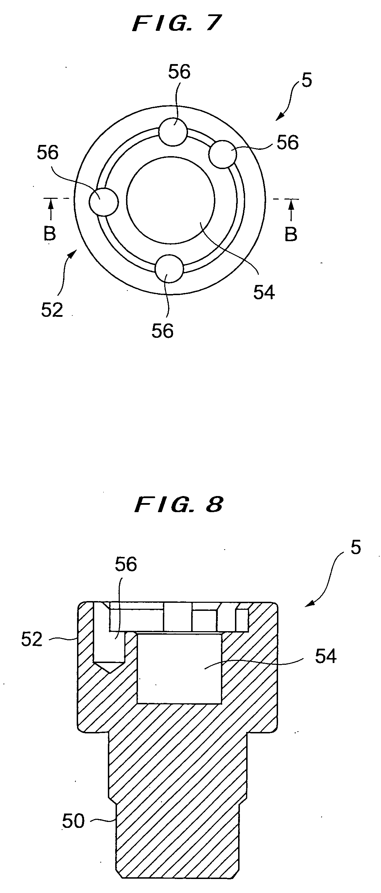

The wheel lock 1 having the above arrangement can be loosened only with a special wrench tool. Such a wrench tool has an engaging portion for engaging with the key arrangement of the key portion 12 of the wheel lock 1. FIGS. 7 through 10 show a wrench tool 5 for detaching the wheel lock 1. As shown in FIGS. 7 through 10, the wrench tool 5 for detaching the wheel lock 1 has a polygonal wrench portion 50, e.g., a hexagonal column, and an engaging portion 52 for engaging with the pins 20 in the key portion 12 of the wheel lock 1.

The engaging portion 52 has a key arrangement corresponding to the key arrangement of the key portion 12 of the wheel lock 1. Specifically, as shown in FIG. 8, the engaging portion 52 has a first recess 54 formed at a central portion thereof and second recesses 56 formed around the first recess 54. The first recess 54 of the engaging portion 52 is shaped to receive therein, the cylindrical central portion 12a of the key portion 12 of the wheel lock 1 (see FIGS. 2 through 5). The second recesses 56 of the engaging portion 52 are arranged and shaped to receive therein, the pins 20 of the key portion 12 of the wheel lock 1. The second recesses 56 are formed at positions corresponding to the circular recesses 18 and the pins 20 in the key portion 12. When the wrench tool 5 is attached to the wheel lock 1, the pins 20 of the wheel lock 1 are properly held in engagement with the second recesses 56 of the wrench tool 5. In this state, the wrench portion 50 of the wrench tool 5 is rotated with use of a general wrench to loosen the wheel lock 1 and the attachment bolt 4.

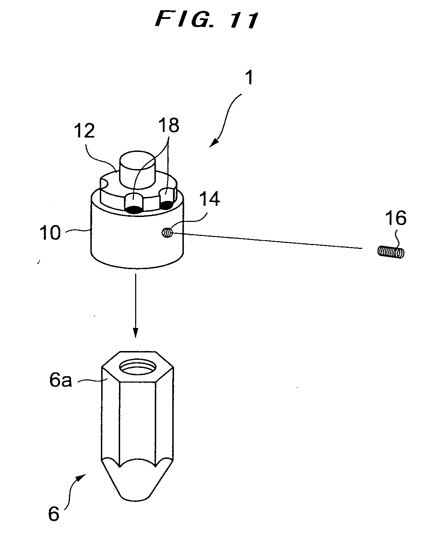

In the above embodiment, the wheel lock 1 is attached to the attachment bolt 4, which is used to attach rims to a vehicle. The wheel lock 1 is also applicable to an attachment device used to attach hubcaps to wheels of a vehicle. Further, as shown in FIG. 11, the wheel lock 1 may be attached to an attachment nut 6 used to attach rims to a vehicle. In FIG. 11, a head 6a of the attachment nut 6 is received within the receiving space S in the receiving portion 10 of the wheel lock 1 to fix the wheel lock 1 to the attachment nut 6.

In the above embodiment, the key arrangement of the wheel lock 1 includes the circular recesses 18 and the pins 20 disposed therein, and the corresponding key arrangement of the wrench tool 5 is formed by the circular recesses 56. However, these key arrangements are not limited to the illustrated examples. For example, the key arrangement of the wheel lock 1 may have only the recesses 18, and the corresponding key arrangement of the wrench tool 5 may include the recesses 56 and the pins 20 fitted therein. Alternatively, these key arrangements may comprise a combination of a recess and a pin, respectively. Further, the key arrangement of the wheel lock 1 may have only the recesses 18, the corresponding key arrangement of the wrench tool 5 may have only the recesses 56, and the pins 20 may be prepared separately from the wheel lock 1 and the wrench tool 5.

Although certain preferred embodiments of the present invention have been shown and described in detail, it should be understood that various changes and modifications may be made therein without departing from the scope of the appended claims.

## Claims

1. An anti-theft device for use with an attachment device, having a head, used to attach a hubcap to a wheel of a vehicle or a rim to an axle of a vehicle, said anti-theft device comprising:
a receiving portion having an inner surface shaped to receive the head of the attachment device; and
a key portion having a key arrangement provided on said receiving portion.

2. An anti-theft device according to claim 1, wherein said key arrangement comprises a plurality of recesses.

3. An anti-theft device according to claim 2, wherein said recesses comprise a circular recess.

4. An anti-theft device according to claim 2, wherein said recesses are arranged at predetermined positions along a circumferential direction.

5. An anti-theft device according to claim 1, wherein said key arrangement comprises a plurality of pins.

6. An anti-theft device according to claim 5, wherein said pins comprise a cylindrical pin.

7. An anti-theft device according to claim 5, wherein said pins are arranged at predetermined positions along a circumferential direction.

8. An anti-theft device according to claim 1, wherein said receiving portion has a through-hole formed in a sidewall thereof for receiving a locking member operable to engage the head of the attachment device.

9. An anti-theft device according to claim 1, wherein the attachment device comprises at least one of a bolt and a nut.

10. A wrench tool for detaching an anti-theft device that is used with an attachment device, having a head, used to attach a hubcap to a wheel of a vehicle or a rim to an axle of a vehicle, the anti-theft device comprising a receiving portion having an inner surface shaped to receive the head of the attachment device, and a key portion having a first key arrangement provided on the receiving portion, said wrench tool comprising:
a wrench portion rotatable by a wrench; and
an engagement portion having a second key arrangement for engaging with the first key arrangement of the anti-theft device.

11. A wrench tool according to claim 10, wherein said second key arrangement comprises a plurality of recesses.

12. A wrench tool according to claim 11, wherein said recesses comprise a circular recess.

13. A wrench tool according to claim 11, wherein said recesses are arranged at predetermined positions along a circumferential direction.

14. A wrench tool according to claim 10, wherein said second key arrangement comprises a plurality of pins.

15. A wrench tool according to claim 14, wherein said pins comprise a cylindrical pin.

16. A wrench tool according to claim 14, wherein said pins are arranged at predetermined positions along a circumferential direction.
